# EUROPEAN PATENT SPECIFICATION

(11) **EP 4 407 730 B1**
(45) Date of publication and mention of the grant of the patent: **28.10.2026**
(21) Application number: 22911881.5
(22) Date of filing: 20.12.2022
(51) Int. Cl.: H01M 10/052, H01M 4/36, H01M 4/525, H01M 4/62, H01M 4/587, H01M 4/48, H01M 4/38, H01M 4/133, H01M 4/131, H01M 10/0525, H01M 10/0568, H01M 10/0569

(54) **SECONDARY BATTERY**
SEKUNDÄRBATTERIE
BATTERIE SECONDAIRE

(30) Priority: 21.12.2021 KR 20210184260
(43) Date of publication of application: 31.07.2024
(60) Divisional application: 26202856.6
(73) Proprietor: LG Energy Solution, Ltd., Seoul 07335 (KR)
(72) Inventor: KIM, Ye Lin, Daejeon 34122 (KR); JO, Mi Ru, Daejeon 34122 (KR); PARK, Sung Bin, Daejeon 34122 (KR); JEONG, Seung Hwan, Daejeon 34122 (KR)
(74) Representative: Hoffmann Eitle
(86) International application number: PCT/KR2022/020879
(87) International publication number: WO 2023/121248

(56) References cited:
- CN-A- 112 542 583
- KR-A- 20180 002 055
- KR-A- 20200 022 903
- KR-A- 20200 052 176
- KR-B1- 102 120 272
- US-A1- 2019 169 042
- US-B2- 10 985 367

## Description

### TECHNICAL FIELD

### Cross-reference to Related Applications

This application claims the benefit of Korean Patent Application No. 10-2021-0184260, filed on December 21,2021, in the Korean Intellectual Property Office.

### Technical Field

The present invention relates to a secondary battery, and, particularly, to a lithium secondary battery.

### BACKGROUND ART

The rapid popularization of battery-powered electronics such as mobile phones, notebook computers, and electric vehicles has brought with it a rapidly rising demand for small, lightweight, and relatively higher-capacity lithium secondary batteries lately. In particular, with the rapid advancement of portable electronic devices, developing a lithium secondary battery that is available at high voltage and has high energy density is in demand.

Typically, lithium secondary batteries include a positive electrode, a negative electrode, a separator interposed between the positive electrode and the negative electrode, an electrolyte, and the like. In addition, with respect to the positive electrode and the negative electrode, an active material layer including a positive electrode active material or a negative electrode active material may be formed on a collector. In the positive electrode, a lithium-containing metal oxide such as lithium cobalt oxide (LiCoO₂) or lithium manganese oxide (LiMn₂O₄) is generally used as a positive electrode active material, and accordingly, in the negative electrode, a carbon-based active material and a silicon-based active material that do not contain lithium are used as a negative electrode active material.

In this case, among the lithium-containing metal oxides used as the positive electrode active material, lithium cobalt-based oxide is taking center stage due to high operating voltage and excellent capacity thereof, but has poor thermal properties due to an unstable crystalline structure resulting from lithium deintercalation, and has an unstable structure at high voltage. In addition, upon charging, the lithium cobalt-based oxide is oxidized to have a Co oxidation value of 4⁺, and may thus have degraded surface stability and reduced lifetime due to side reactions with an electrolyte. In particular, according to the need for developing a secondary battery having a high energy density of 800 Wh/L or more, a greater driving voltage range of the lithium cobalt-based oxide, greater charging voltage, and greater rolling density are required, and accordingly, there is a further need to overcome the limitations above.

### [Related Art Document]

### [Patent Document]

Chinese Patent Publication No. 103500827
Patent Document US 10,985,367 B2 relates to a lithium cobalt composite oxide that is doped with magnesium and having an atomic ratio of Mg/Co of about 0.0035:1 to about 0.01:1.
Patent Application US 2019/0169042 A1 relates to a cobalt precursor that is cobalt oxyhydroxide (CoMOOH) doped with, as dopants, magnesium (Mg) and M different from the magnesium.

### DISCLOSURE OF THE INVENTION

### TECHNICAL PROBLEM

An aspect of the present invention provides a secondary battery having excellent quick charging performance and lifetime performance even at high energy density, specifically, a high energy density of 800 Wh/L or more.

### TECHNICAL SOLUTION

According to an aspect of the present invention, provided is a secondary battery including a positive electrode, a negative electrode, a separator disposed between the negative electrode and the positive electrode, and an electrolyte, wherein the positive electrode includes a positive electrode active material comprising a lithium cobalt-based oxide particle and a metal with which the lithium cobalt-based oxide particle is doped or coated, the metal includes aluminum (Al), magnesium (Mg), titanium (Ti), and zirconium (Zr), the metal includes the titanium (Ti) and the zirconium (Zr) in an amount of 300 ppm to 1,500 ppm with respect to a weight of the positive electrode active material, the metal includes the aluminum (Al) in an amount of 3,000 ppm to 7,000 ppm with respect to the weight of the positive electrode active material, and the negative electrode includes a carbon-based active material and a silicon-based active material.

### ADVANTAGEOUS EFFECTS

A secondary battery of the present invention includes a positive electrode including a positive electrode active material comprising lithium cobalt-based oxide particles and a metal with which the lithium cobalt-based oxide particles are doped or coated in a specific amount, and a negative electrode including a carbon-based active material and a silicon-based active material. In this case, the metal included in the positive electrode active material includes aluminum (Al), magnesium (Mg), titanium (Ti), and zirconium (Zr), and the metal includes titanium (Ti), zirconium (Zr), and aluminum (Al) in a specific amount. The positive electrode includes the above-described positive electrode active material, and may thus have high structural stability and lifetime characteristics. In particular, when the positive electrode is used together with the negative electrode including the carbon-based active material and the silicon-based active material, a secondary battery having excellent quick charging performance and lifetime performance even at high energy density, specifically a high energy density of 800 Wh/L or more is obtainable.

### MODE FOR CARRYING OUT THE INVENTION

It will be understood that words or terms used in the specification and claims of the present invention shall not be construed as being limited to having the meaning defined in commonly used dictionaries. It will be further understood that the words or terms should be interpreted as having meanings that are consistent with their meanings in the context of the relevant art and the technical idea of the invention, based on the principle that an inventor may properly define the meaning of the words or terms to best explain the invention.

The terminology used herein is for the purpose of describing particular example embodiments only and is not intended to be limiting of the present invention. The singular forms are intended to include the plural forms as well, unless the context clearly indicates otherwise.

It will be further understood that the terms "include," "comprise," or "have" when used in this specification, specify the presence of stated features, numbers, steps, elements, or combinations thereof, but do not preclude the presence or addition of one or more other features, numbers, steps, elements, or combinations thereof.

The term "average particle diameter (D₅₀)" as used herein may be defined as a particle diameter at a cumulative volume of 50% in a particle size distribution curve of particles. The average particle diameter (D₅₀), for example, may be measured by using a laser diffraction method. The laser diffraction method generally allows the measurement of a particle diameter ranging from a submicron level to a few mm and may produce highly repeatable and high-resolution results.

Hereinafter, the present invention will be described in detail.

### <Secondary battery>

The present invention relates to a secondary battery, and particularly, to a lithium secondary battery.

Specifically, a secondary battery according to the present invention includes a positive electrode, a negative electrode; a separator disposed between the negative electrode and the positive electrode, and an electrolyte, the positive electrode includes a positive electrode active material comprising lithium cobalt-based oxide particles and a metal with which the lithium cobalt-based oxide particles are doped or coated, the metal includes aluminum (Al), magnesium (Mg), titanium (Ti), and zirconium (Zr), the metal includes titanium (Ti) and zirconium (Zr) in an amount of 300 ppm to 1,500 ppm with respect to a weight of the positive electrode active material, the metal includes aluminum (Al) in an amount of 3,000 ppm to 7,000 ppm with respect to a weight of the positive electrode active material, and the negative electrode includes a carbon-based active material and a silicon-based active material.

In general, when lithium cobalt oxide (LiCoO₂) is used as a typical positive electrode active material at high voltage, a large amount of lithium ions are released from the lithium cobalt oxide to make a crystalline structure defective, and the resulting unstable crystalline structure may collapse to deteriorate reversibility. In addition, when Co³⁺ or Co⁴⁺ ions present on a surface of the lithium cobalt oxide are reduced by an electrolyte in a state where lithium ions are released, oxygen may be deintercalated from the crystalline structure to further accelerate the structural collapse. In particular, according to the need for developing a secondary battery having a high energy density of 800 Wh/L or more, a greater driving voltage range of the lithium cobalt-based oxide, greater charging voltage, and greater rolling density are required, and accordingly, there is a further need to overcome the limitations above.

To make sure that the issue described above is prevented, the positive electrode according to the present invention includes a positive electrode active material comprising lithium cobalt-based oxide particles and a metal with which the lithium cobalt-based oxide particles are doped or coated, the metal includes aluminum (Al), magnesium (Mg), titanium (Ti), and zirconium (Zr), the metal includes titanium (Ti) and zirconium (Zr) in an amount of 300 ppm to 1,500 ppm with respect to a weight of the positive electrode active material, and the metal includes aluminum (Al) in an amount of 3,000 ppm to 7,000 ppm with respect to a weight of the positive electrode active material. Accordingly, the structural stability of the positive electrode active material when used at high voltage and high energy density may be remarkably improved. In particular, the secondary battery according to the present invention uses a negative electrode including a carbon-based active material and a silicon-based active material, along with the above-described positive electrode, so that the secondary battery having high energy density, specifically, a high energy density of 800 Wh/L or more, may have remarkably improved quick charging performance and lifetime performance.

### Positive electrode

The positive electrode according to the present invention includes a positive electrode active material comprising lithium cobalt-based oxide particles and a metal with which the lithium cobalt-based oxide particles are doped or coated, the metal includes aluminum (Al), magnesium (Mg), titanium (Ti), and zirconium (Zr), the metal includes titanium (Ti) and zirconium (Zr) in an amount of 300 ppm to 1,500 ppm with respect to a weight of the positive electrode active material, and the metal includes aluminum (Al) in an amount of 3,000 ppm to 7,000 ppm with respect to a weight of the positive electrode active material.

The positive electrode active material includes lithium cobalt-based oxide particles. The lithium cobalt-based oxide particles exhibit stability in a higher voltage range, for example, a charging voltage of 4.4 V or more, than other positive electrode active materials such as lithium-nickel-cobalt-manganese oxide, but are still at a risk of having reduced structural stability when used at high voltage. However, as will be described later, the positive electrode active material according to the present invention may exhibit excellent stability at high voltage and high energy density through a metal with which the lithium cobalt-based oxide particles are doped or coated in a specific amount of the metal.

The lithium cobalt-based oxide particles may include a compound represented by Formula 1 below.

[Formula 1] Li₁₊ₓCo₁₋ₓO₂

In Formula 1 above, 0≤x≤0.2 is satisfied.

The lithium cobalt-based oxide particles are doped or coated with the metal. The metal includes aluminum (Al), magnesium (Mg), titanium (Ti), and zirconium (Zr).

The metal includes titanium (Ti) and zirconium (Zr) in an amount of 300 ppm to 1,500 ppm with respect to a weight of the positive electrode active material.

The positive electrode active material include titanium (Ti) and zirconium (Zr) with which lithium cobalt-based oxide particles are doped or coated in the above-described amounts, and may thus have improved durability and reduced resistance. Accordingly, the structural collapse of the positive electrode active material is prevented when a secondary battery which will be described later is used at high voltage, and thus a secondary battery having improved quick charging performance and lifetime performance is achievable. Specifically, the titanium (Ti) is used along with aluminum (Al) and magnesium (Mg), and thus rate characteristics according to resistance reduction may be improved. In addition, the zirconium (Zr) is used along with aluminum (Al) and magnesium (Mg) to create a structure allowing Li trap at high voltage, thereby preventing structural changes of lithium cobalt-based oxide particles and improving structural stability.

When the metal includes titanium (Ti) and zirconium (Zr) in an amount of less than 300 ppm with respect to a weight of the positive electrode active material, the above-described improvements in structural stability and resistance of the positive electrode active material may be hardly achieved. In addition, when the metal includes titanium (Ti) and zirconium (Zr) in an amount of more than 1,500 ppm with respect to a weight of the positive electrode active material, the positive electrode active material is excessively doped or coated with the metal to increase resistance.

In addition, when the metal includes only titanium from titanium (Ti) and zirconium (Zr), the structural stability of the positive electrode active material is reduced to deteriorate long-life characteristics. When the metal includes only zirconium from titanium (Ti) and zirconium (Zr), the surface resistance of the active material increases to deteriorate the rate characteristics of a cell.

The positive electrode active material may include titanium (Ti) and zirconium (Zr) in an amount of 500 ppm to 1,200 ppm, specifically 700 ppm to 1,100 ppm, with respect to a weight of the positive electrode active material. Within the above range, the effects of improvement in structural stability and resistance described above may be further improved, and the effects of improvement in quick charging performance and lifetime performance may be further improved when a secondary battery having high energy density is used at high voltage.

The metal may include the titanium (Ti) in an amount of specifically 250 ppm to 1,000 ppm, more specifically 400 ppm to 800 ppm, even more specifically 600 ppm to 700 ppm, with respect to the positive electrode active material, the metal may include the zirconium (Zr) in an amount of specifically 40 ppm to 500 ppm, more specifically 45 ppm to 450 ppm, even more specifically 100 ppm to 300 ppm, with respect to the positive electrode active material. When titanium (Ti) and zirconium (Zr) are each used in the above range, it is preferable in that the initial efficiency is not reduced even at high voltage and the structural change of the positive electrode active material is prevented to improve the lifetime of a cell.

In the positive electrode active material, a weight ratio of the titanium (Ti) and the zirconium (Zr) may be 0.5:1 to 18:1, specifically 3:1 to 10:1, more specifically 3.5:1 to 4:1. Within the above range, it is preferable in that the surface resistance of the active material may be kept low to improve the rate characteristics of a cell, and the crystalline structure of the positive electrode active material may be well maintained to improve long-life performance.

The positive electrode active material may be doped or coated with the aluminum (Al) to further improve the structural stability of the positive electrode active material and improve lifetime characteristics of the positive electrode active material.

The metal includes aluminum (Al) in an amount of 3,000 ppm to 7,000 ppm with respect to a weight of the positive electrode active material. When the metal includes aluminum (Al) in an amount of less than 3,000 ppm with respect to a weight of the positive electrode active material, stability at high voltage is hardly achieved and the elution of cobalt intensifies. In addition, when the metal includes aluminum (Al) in an amount of more than 7,000 ppm with respect to a weight of the positive electrode active material, the positive electrode active material is excessively doped or coated with aluminum to increase resistance and reduce lifetime performance so as to increase the elution of cobalt.

The metal may specifically include the aluminum (Al) in an amount of 4,000 ppm to 4,800 ppm with respect to a weight of the positive electrode active material.

A weight ratio of the aluminum (Al) to a total weight of the titanium (Ti) and the zirconium (Zr) may be 4 to 8, specifically 4.5 to 6.5. Within the above range, the effects of the structural stability of the positive electrode active material, the control of Co elution, and the improvement in lifetime of a lithium secondary battery may be enhanced in harmony.

When the positive electrode active material is doped or coated with the magnesium (Mg), the structural stability of the positive electrode active material may be improved through a wide band gap, and lithium and electron transfer may be facilitated on a surface or inside of the positive electrode active material.

The metal may include magnesium (Mg) in an amount of 800 ppm to 2,000 ppm, specifically 1,000 ppm to 1,700 ppm, with respect to a total weight of the positive electrode active material.

A weight ratio of the magnesium (Mg) to a total weight of the titanium (Ti) and the zirconium (Zr) may be 1.2 to 4.5, specifically 1.5 to 2.0. Within the above range, the effects of the structural stability of the positive electrode active material, the smooth movement of lithium in the positive electrode active material, and the improvement in lifetime of a lithium secondary battery may be enhanced in harmony.

An amount of the metal with which the lithium cobalt-based oxide particles are doped or coated may be measured using ICP-AES (inductively coupled plasma atomic emission spectrometer).

The positive electrode active material may be formed of a plurality of particles, and in this case, the plurality of particles may have a bi-modal structure of large particles and small particles. When the positive electrode active material has a bimodal structure, the packing of the positive electrode active material in the positive electrode is improved, so that a positive electrode having high energy density is obtainable.

When the positive electrode active material has a bimodal structure, the large particles may have an average particle diameter (D₅₀) of 10 µm to 25 µm, specifically 12 µm to 18 µm, and the small particles may have an average particle diameter (D₅₀) of 1 µm to 7 µm, specifically 2 µm to 6 µm, and within the above range, it is preferable in that a positive electrode having high energy density is obtainable.

When the positive electrode active material has a bimodal structure, a weight ratio of the large particles and the small particle may be 1: 1 to 15: 1, specifically 2: 1 to 5: 1, and within the above range, dispersibility may be improved when preparing a positive electrode slurry for preparing a positive electrode, and the rate characteristics of a cell may be further improved when preparing a positive electrode having high loading.

The preparation of the positive electrode active material is not particularly limited as long as a positive electrode active material having the above-described characteristics is achievable. For example, the positive electrode active material may be prepared through a method including the following steps.
(a) dry mixing cobaltate, a lithium precursor, and a metal precursor including aluminum (Al), magnesium (Mg), titanium (Ti), and zirconium (Zr) to form a mixture; and
(b) heat-treating the mixture at 900 °C or higher.

The cobaltate may be at least one type selected from the group consisting of Co₃O₄, CoCO₃, Co(NO₃)₂, and Co(OH)₂, and may specifically be at least one type selected from the group consisting of Co₃O₄ and Co(OH)₂.

The lithium precursor may be at least one type selected from the group consisting of Li₂CO₃, LiOH, LiNO₃, CH₃COOLi, and Li₂(COO)₂, and may specifically be at least one type selected from the group consisting of LiOH and Li₂CO₃.

The metal precursor includes aluminum (Al), magnesium (Mg), titanium (Ti), and zirconium (Zr). Specifically, the metal precursor may be at least one type selected from the group consisting of metals, metal oxides, and metal salts including aluminum (Al), magnesium (Mg), titanium (Ti), and zirconium (Zr).

The heat treatment may be performed at 900 °C or higher, specifically 900 °C to 1,200 °C, more specifically 1,000 °C to 1,100 °C. The heat treatment may be performed for 4 hours to 20 hours, and specifically, for 5 hours to 15 hours.

The input or mixing ratio of the cobaltate, the lithium precursor, and the metal precursor including aluminum (Al), magnesium (Mg), titanium (Ti), and zirconium (Zr) may be adjusted in consideration of the amount of each component of the positive electrode active material described above.

In addition to steps (a) and (b), the method for preparing a positive electrode active material may further include adjusting an average particle diameter (D₅₀) of the heat-treated mixture (c). For example, two types of positive electrode active materials having different average particle diameters (D₅₀) are prepared through the step (c), and thus a positive electrode active material having a bimodal structure is achievable.

The positive electrode may include a positive electrode current collector and a positive electrode active material layer disposed on at least one surface of the positive electrode current collector.

The positive electrode current collector is not particularly limited as long as it has conductivity without causing chemical changes in batteries. To be specific, the positive electrode current collector may include at least one selected from the group consisting of copper, stainless steel, aluminum, nickel, titanium, fired carbon, and an aluminum-cadmium alloy, and may specifically include aluminum.

The positive electrode current collector may generally have a thickness of 3 µm to 500 µm.

The positive electrode current collector may have fine irregularities formed on a surface thereof to improve bonding strength of a positive electrode active material. For example, the positive electrode current collector may be used in various forms such as a film, a sheet, a foil, a net, a porous body, a foam body, and a non-woven fabric body.

The positive electrode active material layer may be disposed on the positive electrode current collector, and may specifically be disposed on one surface or both surfaces of the positive electrode current collector.

The positive electrode active material layer may include the positive electrode active material described above.

The positive electrode active material layer may include the positive electrode active material in an amount of 80 wt% to 99 wt%, preferably 92 wt% to 98 wt% weight, in consideration of exhibiting sufficient capacity of the positive electrode active material.

The positive electrode active material layer may further include a positive electrode binder and a positive electrode conductive material, along with the positive electrode active material.

The positive electrode binder is a component that supports binding of an active material and a conductive material and binding to a collector, and may specifically include at least one type selected from the group consisting of polyvinylidene fluoride, polyvinyl alcohol, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene terpolymer (EPDM), a sulfonated EPDM, styrene-butadiene rubber, and fluorine rubber, and may preferably be polyvinylidene fluoride.

The positive electrode binder may be included in an amount of 0.1 wt% to 10 wt%, preferably 0.1 wt% to 3 wt%, and more specifically 0.5 wt% to 2.5 wt% in a positive electrode active material layer to sufficiently secure binding force between components such as positive electrode active materials.

The positive electrode conductive material may be used to support and improve the conductivity of a secondary battery, and is not particularly limited as long as it has conductivity without causing chemical changes in batteries. Specifically, the conductive material may include at least one type selected from the group consisting of: graphite such as natural graphite or artificial graphite; carbon black such as acetylene black, Ketjen black, channel black, furnace black, lamp black, and thermal black; conductive fibers such as carbon fibers or metal fibers; carbon nanotubes such as single-walled carbon nanotubes and multi-walled carbon nanotubes; fluorocarbon; metal powder such as aluminum powder and nickel powder; conductive whisker such as zinc oxide and potassium titanate; conductive metal oxide such as titanium oxide; and polyphenylene derivatives, and may specifically include carbon black and carbon nanotubes, more specifically carbon black and multi-walled carbon nanotubes in terms of improving conductivity.

The positive electrode conductive material may be included in an amount of 0.1 wt% to 10 wt%, preferably 0.1 wt% to 3.0 wt%, and more specifically 0.5 wt% to 2.5 wt% in a positive electrode active material layer to sufficiently secure electrical conductivity.

The positive electrode active material layer may have a thickness of 30 µm to 400 µm, preferably 50 µm to 200 µm.

The positive electrode may have a loading amount of 3.5 mAh/cm² to 7.5 mAh/cm², specifically 4.5 mAh/cm² to 6.5 mAh/cm², more specifically 4.7 mAh/cm² to 5.0 mAh/cm².

The positive electrode may have an electrode density of 3.6 g/cc to 4.5 g/cc, specifically 4.0 g/cc to 4.3 g/cc. According to the present invention, excellent quick charging performance and lifetime performance may be provided even at high electrode density and energy density. The positive electrode active material according to the present invention includes lithium cobalt-based oxide particles, and thus have a low risk of having the active material broken upon roll pressing compared to other positive electrode active materials (e.g., lithium nickel cobalt manganese oxide particles, and the like) to achieve a high level of electrode density. Accordingly, the secondary battery of the present invention uses a positive electrode having the above-described characteristics, and may thus significantly improve quick charging performance and lifetime performance to be excellent even at high energy density (e.g., 800 Wh/L or more).

A positive electrode slurry including a positive electrode active material and optionally a positive electrode binder, a positive electrode conductive material, and a solvent for forming a positive electrode slurry may be applied onto the positive electrode current collector, and then dried and roll pressed to prepare the positive electrode.

A solvent for forming the positive electrode slurry may include an organic solvent such as N-methyl-2-pyrrolidone (NMP), and may be used in an amount such that desirable viscosity is obtained when the positive electrode active material, and optionally the positive electrode binder and the positive electrode conductive material are included. For example, the positive electrode slurry may include the solvent for forming the positive electrode slurry such that the concentration of the solid content, which includes the positive electrode active material, and the optionally included positive electrode binder and the positive electrode conductive material, reaches 50 wt% to 95 wt%, preferably 70 wt% to 90 wt%.

### Negative electrode

The negative electrode according to the present invention may be disposed to face the positive electrode.

The negative electrode according to the present invention includes a carbon-based active material and a silicon-based active material.

The negative electrode according to the present invention uses a silicon-based active material having high capacity characteristics along with a carbon-based active material, and may thus have high energy density and a small thickness. In particular, when the negative electrode according to the present invention is used together with the positive electrode described above, the lithium insertion rate may be significantly improved, and accordingly, a secondary battery having improved quick charging performance and lifetime performance is obtainable. When a carbon-based active material is used alone as the negative electrode active material, compared to the case of using a carbon-based active material and a silicon-based active material together, a high capacity per volume is hardly achieved, the thickness of the negative electrode needs to be increased to obtain high capacity, and the lithium insertion rate from the positive electrode inevitably slows down due to the increase thickness of the negative electrode, thereby failing to improve quick charging performance.

The carbon-based active material may include at least one type selected from the group consisting of artificial graphite, natural graphite, hard carbon, soft carbon, carbon black, graphene, and fibrous carbon, and may specifically include at least one type selected from the group consisting of artificial graphite and natural graphite.

The carbon-based active material may have an average particle diameter (D₅₀) of be 5 µm to 35 µm, preferably 10 µm to 20 µm, in terms of ensuring structural stability upon charging and discharging and reducing side reactions with an electrolyte.

The silicon-based active material may include a silicon-based compound represented by SiOₓ (0≤x<2). The silicon-based compound may be represented by Formula of SiOₓ (0≤x<2), and may be specifically represented by Formula of SiOₓ (0<x<2). Meanwhile, as SiO₂ (where x = 2) does not react with lithium ions and thus is not able to store lithium, x is preferably within the above range. Specifically, the silicon-based compound may be represented by Formula of SiOₓ (0.5≤x≤1.5).

More specifically, the silicon-based active material may include a silicon-based compound represented by SiOₓ (0≤x<2) and a metal with which the silicon-based compound is doped. In general, due to the presence of an irreversible site in the silicon-based active material, the silicon-based active material causes an irreversible reaction in which a portion of the lithium moved to the negative electrode upon initial charging does not return to the positive electrode upon discharging. To make sure that the issue is prevented, the metal may be introduced to reduce the irreversible phase of the silicon-based compound and improve efficiency as the silicon-based compound is doped with the metal.

The silicon-based compound may be doped with the metal. Specifically, the silicon-based compound is doped with the metal, and the metal may thus be located inside, on a surface, or inside and on a surface of the silicon-based compound. The silicon-based compound is doped with the metal, and the metal may thus form metal silicate with silicon oxide included in the first silicon-based compound.

The metal may include at least one metal selected from the group consisting of Li, Mg, Ca, and Al. Specifically, the metal may include at least one metal selected from the group consisting of Li and Mg, more specifically Mg, in terms of the fact that effects such as the volume expansion control, damage prevention, and initial efficiency improvement of silicon-based oxide particles are achievable.

A weight of the metal may be 1 wt% to 30 wt%, specifically 5 wt% to 20 wt%, with respect to a total weight of the silicon-based compound and the metal. Within the above range, the irreversible capacity of the first silicon-based active material may be sufficiently removed, and capacity reduction resulting from excessive metal doping may be prevented as well. An amount of the metal may be measured using ICP-AES (inductively coupled plasma atomic emission spectrometer) .

The silicon-based active material may further include a carbon coating layer disposed on a surface thereof. The carbon coating layer may serve as a protection layer that suppresses volume expansion of the silicon-based active material and prevents a side reaction with an electrolyte.

The silicon-based active material may include the carbon coating layer in an amount of 0.1 wt% to 10 wt%, preferably 3 wt% to 7 wt%, and when the carbon coating layer is within the above range, it is preferable in that the volume expansion of the silicon-based active material may be controlled to an excellent level and also a side reaction with an electrolyte may be prevented.

The carbon coating layer may be an amorphous carbon coating layer. Specifically, the carbon coating layer may be formed through chemical vapor deposition (CVD) using at least one type of hydrocarbon gas selected from the group consisting of methane, ethane, and acetylene.

The average particle diameter (D₅₀) of the silicon-based active material may be 1 µm to 15 µm, more preferably 2 µm to 8 µm, in terms of ensuring the structural stability of the active material upon charging and discharging, preventing an increase in the extent of volume expansion/contraction with an excessively large particle size, and preventing reduction in initial efficiency due to excessively low particle size.

A weight ratio of the carbon-based active material and the silicon-based active material may be 83:17 to 99:1, specifically 88:12 to 93:7. Within the above range, a reduced effect on the volume expansion of the silicon-based active material, sufficient capacity of the negative electrode, and a high-loading negative electrode are achievable.

The negative electrode may include a negative electrode current collector and a negative electrode active material layer disposed on at least one surface of the negative electrode current collector.

The negative electrode current collector is not particularly limited as long as it has conductivity without causing chemical changes in batteries. To be specific, the negative electrode current collector may include at least one selected from the group consisting of copper, stainless steel, aluminum, nickel, titanium, fired carbon, and an aluminum-cadmium alloy, and may specifically include copper.

The negative electrode current collector may generally have a thickness of 3 µm to 500 µm.

The negative electrode current collector may have fine irregularities formed on a surface thereof to improve bonding strength of a negative electrode active material. For example, the negative electrode current collector may be used in various forms such as a film, a sheet, a foil, a net, a porous body, a foam body, and a non-woven fabric body.

The negative electrode active material layer may be formed on at least one surface of the negative electrode current collector. Specifically, the negative electrode active material layer may be formed on one surface or both surfaces of the negative electrode current collector.

The negative electrode active material layer includes the carbon-based active material and silicon-based active material described above. Detailed descriptions of the carbon-based active material and the silicon-based active material have been described above.

The negative electrode active material layer may include the carbon-based active material layer in an amount of 65 wt% to 98 wt%, specifically 80 wt% to 95 wt%.

The negative electrode active material layer may include the silicon-based active material in an amount of 1 wt% to 20 wt%, specifically 3 wt% to 15 wt% to reduce the effect on volume expansion of the silicon-based active material and secure sufficient capacity of the negative electrode.

The negative electrode active material layer may further include a negative electrode binder and a negative electrode conductive material, along with the carbon-based active material and the silicon-based active material.

In that the negative electrode binder may further improve electrode adhesion and provide sufficient resistance to volume expansion/contraction of the active material, the negative electrode binder may include at least one type selected from the group consisting of polyvinylidene fluoride (PVdF), styrene butadiene rubber (SBR), acrylonitrile butadiene rubber, acrylic rubber, butyl rubber, fluoro rubber, polyvinyl alcohol, carboxymethyl cellulose (CMC), starch, hydroxypropyl cellulose, regenerated cellulose, polyvinyl alcohol (PVA), polyacrylic acid (PAA), polyethylene glycol (PEG), polyacrylonitrile (PAN), and polyacrylamide (PAM), and may specifically include styrene butadiene rubber (SBR).

The negative electrode active material layer may include the negative electrode binder in an amount of 0.1 wt% to 10 wt%, specifically 2 wt% to 8 wt%. Within the above range, it is preferable in that a negative electrode having an excellent capacity along with an effect of improving adhesion and controlling the thickness expansion of the negative electrode is achievable.

The negative electrode conductive material may be used to improve conductivity of the negative electrode active material layer, and may preferably have conductivity without causing chemical changes. Specifically, the negative electrode conductive material may be at least one type selected from the group consisting of natural graphite, artificial graphite, carbon black, acetylene black, Ketjen black, channel black, furnace black, lamp black, thermal black, conductive fiber, single-wall carbon nanotube (SWCNT), multi-wall carbon nanotube (MWCNT), fluorocarbon, aluminum powder, nickel powder, zinc oxide, potassium titanate, titanium oxide, and polyphenylene derivatives, and may preferably include at least one type selected from single-wall carbon nanotube and multi-wall carbon nanotube, more specifically single-wall carbon nanotube, in consideration of maintaining a conductive network of a silicon-based active material.

The negative electrode active material layer may include the conductive material in an amount of 0.001 wt% to 10 wt%, specifically 0.01 wt% to 1 wt%, and when the conductive material is within the above range, it is preferable in that volume expansion resulting from charging and discharging is controlled and disconnection of a conductive network due to the volume expansion of the negative electrode active material is prevented.

The negative electrode active material layer may further include a thickener. The thickener may include carboxymethylcellulose (CMC).

The negative electrode active material layer may include the thickener in an amount of 0.5 wt% to 5 wt%, but the present invention is not limited thereto.

The negative electrode active material layer may have a loading amount of 4 mAh/cm² to 8 mAh/cm², specifically 4.0 mAh/cm² to 7.5 mAh/cm², more specifically 4 mAh/cm² to 7 mAh/cm². According to the present invention, an excellent level of quick charging performance and lifetime performance may be achieved even in the high-loading negative electrode as described above.

The negative electrode active material layer may have an electrode density of 1.4 g/cc to 2.0 g/cc, specifically 1.5 g/cc to 1.9 g/cc, more specifically 1.6 g/cc to 1.8 g/cc. According to the present invention, excellent quick charging performance and lifetime performance may be provided even at high electrode density and energy density.

The negative electrode active material may have a thickness of 20 µm to 200 µm, preferably 30 µm to 90 µm. In the negative electrode according to the present invention, a negative electrode having a small thickness and high energy density according to the use of a carbon-based active material and a silicon-based active material is obtainable, and lithium ions are well inserted from the positive electrode to allow an improvement in quick charging performance.

A negative electrode binder, a negative electrode conductive material, and/or a thickener may optionally be added to a solvent (e.g., water) along with the carbon-based active material and the silicon-based active material to prepare a negative electrode slurry, and the negative electrode slurry is applied onto the negative electrode current collector, roll pressed, and dried to prepare the negative electrode active material layer.

The negative electrode active material layer may have a double layer structure. Specifically, the negative electrode active material layer may include a first negative electrode active material layer disposed on the negative electrode current collector and a second negative electrode active material layer disposed on the first negative electrode active material layer.

Specifically, the carbon-based active material may include a first carbon-based active material and a second carbon-based active material, and the silicon-based active material may include a first silicon-based active material and a second silicon-based active material. In addition, the first negative electrode active material layer may include the first carbon-based active material and the first silicon-based active material, and the second negative electrode active material layer may include the second carbon-based active material and the second silicon-based active material.

As used herein, the "first carbon-based active material" and the "second carbon-based active material", and the "first silicon-based active material" and the "second silicon-based active material" are terms for describing positions where the carbon-based active material and the silicon-based active material are each included, and the above descriptions for the carbon-based active material and the silicon-based active material may be equally applied.

The first negative electrode active material layer may include the first carbon-based active material and the first silicon-based active material in a weight ratio of 83:17 to 99:1, specifically, 88:12 to 93:7. In addition, the second negative electrode active material layer may include the second carbon-based active material and the second silicon-based active material in a weight ratio of 83:17 to 99:1, specifically, 88:12 to 93:7. Within the above range, a reduced effect on the volume expansion of the silicon-based active material, sufficient capacity of the negative electrode, and a high-loading negative electrode are achievable.

The first negative electrode active material layer may include the first carbon-based active material in an amount of 65 wt% to 98 wt%, specifically 80 wt% to 95 wt%. The second negative electrode active material may include the second carbon-based active material layer in an amount of 65 wt% to 98 wt%, specifically 80 wt% to 95 wt%.

The first negative electrode active material layer may include the first silicon-based active material in an amount of 1 wt% to 20 wt%, specifically 3 wt% to 15 wt%. The second negative electrode active material layer may include the second silicon-based active material in an amount of 1 wt% to 20 wt%, specifically 3 wt% to 15 wt%.

When the negative electrode active material layer includes a first negative electrode active material layer and a second negative electrode active material layer, and the negative electrode active material layer includes the negative electrode binder, the negative electrode conductive material, and/or the thickener described above, the negative electrode binder may include a first negative electrode binder and a second negative electrode binder, the negative electrode conductive material may include a first negative electrode conductive material and a second negative electrode conductive material, and the thickener may include a first thickener and a second thickener. In this case, the first negative electrode active material layer may further include the first negative electrode binder, the first negative electrode conductive material, and/or the first thickener, along with the first carbon-based active material and the first silicon-based active material. The second negative electrode active material layer may include the second negative electrode binder, the second negative electrode conductive material, and/or the second thickener, along with the second carbon-based active material and the second silicon-based active material.

As used herein, the "first negative electrode binder" and the "second negative electrode binder", the "first negative electrode conductive material" and the "second negative electrode conductive material", and the "first thickener" and the "second thickener" are terms used to describe positions where the negative electrode binder, the negative electrode conductive material, and the thickener are included, and the above descriptions of the negative electrode binder, the negative electrode conductive material, and the thickener may be equally applied.

The first negative electrode active material layer may include the first negative electrode binder in an amount of 0.1 wt% to 10 wt%, specifically 2 wt% to 8 wt%. The second negative electrode active material layer may include the second negative electrode binder in an amount of 0.1 wt% to 10 wt%, specifically 2 wt% to 8 wt%.

The first negative electrode active material layer may include the first conductive material in an amount of 0.001 wt% to 10 wt%, specifically 0.01 wt% to 1 wt%. The second negative electrode active material layer may include the second conductive material in an amount of 0.001 wt% to 10 wt%, specifically 0.01 wt% to 1 wt%.

The first negative electrode active material layer may include the first thickener in an amount of 0.5 wt% to 5 wt%. The second negative electrode active material may include the second thickener in an amount of 0.5 wt% to 5 wt%.

When the negative electrode active material layer includes a first negative electrode active material layer and a second negative electrode active material layer, and the first negative electrode active material layer and the second negative electrode active material layer each include a first negative electrode binder and a second negative electrode binder, a weight percentage of the first negative electrode binder relative to a total weight of the first negative electrode active material layer may be greater than a weight percentage of the second negative electrode binder relative to a total weight of the second negative electrode active material layer. In this case, the binder may be unevenly distributed in an upper layer of the negative electrode active material layer in terms of overall binder distribution of the negative electrode active material layer, and the binder shortage may be prevented in a lower layer of the negative electrode active material layer, and accordingly, it is preferable in that the distribution of the binder throughout the negative electrode active material layer may be uniform.

Specifically, a ratio of the weight percentage of the first negative electrode binder relative to the total weight of the first negative electrode active material layer and the weight percentage of the second negative electrode binder to relative to the total weight of the second negative electrode active material layer may be 1.5:1 to 2.5:1.

A ratio of a thickness of the first negative electrode active material layer to a thickness of the second negative electrode active material layer may be 1:0.5 to 1:2, specifically 1:0.8 to 1:1.3. Within the above range, it is preferable in that effects of the overall charge/discharge performance, adhesive strength, and thickness expansion control of the negative electrode may be improved all together.

A ratio of a loading amount of the first negative electrode active material layer to a loading amount of the second negative electrode active material layer may be 1:0.5 to 1:2, specifically 1:0.8 to 1:1.3. Within the above range, it is preferable in that effects of the overall charge/discharge performance, adhesive strength, and thickness expansion control of the negative electrode may be improved all together.

In the case where the negative electrode active material layer includes the first negative electrode active material layer and the second negative electrode active material layer, the preparation of the negative electrode is not particularly limited as long as the first negative electrode active material layer and the second negative electrode active material layer having the above-described characteristics are achievable. For example, a first carbon-based active material, a first silicon-based active material, a first binder, a first conductive material, and/or a thickener may be dispersed in a solvent (e.g., water) to prepare a slurry for a first negative electrode active material layer, and a second carbon-based active material, a second silicon-based active material, a second binder, and/or a second conductive material may be dispersed in a solvent (e.g., water) to prepare a slurry for a second negative electrode active material layer, and then the two may be applied onto a negative electrode current collector to prepare a negative electrode according to the present invention. More specifically, the slurry for a first negative electrode active material layer prepared above may be applied onto the negative electrode current collector, roll pressed, and dried to form a first negative electrode active material layer, and the slurry for a second negative electrode active material layer prepared above may be applied onto the first negative electrode active material layer, roll pressed, and dried to form a second negative electrode active material layer so as to prepare a negative electrode according to the present invention. Meanwhile, the slurry for a first negative electrode active material layer may be applied onto the negative electrode current collector, and substantially concurrently the slurry for a second negative electrode active material layer may be applied onto the applied slurry for a first negative electrode active material layer, roll pressed, and dried to prepare a negative electrode according to the present invention.

### Separator

The separator separates the negative electrode and the positive electrode and provides a movement path of lithium ions, and any separator may be used as the separator without particular limitation as long as it is typically used in secondary batteries, and particularly, a separator having high moisture-retention ability for an electrolyte as well as low resistance to the transfer of electrolyte ions may be used. Specifically, a porous polymer film, for example, a porous polymer film manufactured using a polyolefin-based polymer such as an ethylene homopolymer, a propylene homopolymer, an ethylene/butene copolymer, an ethylene/hexene copolymer, and an ethylene/methacrylate copolymer, or a laminated structure having two or more layers thereof may be used. In addition, a typical porous non-woven fabric, for example, a non-woven fabric formed of glass fiber having a high melting point, polyethylene terephthalate fiber, or the like may be used. In addition, a coated separator including a ceramic component or a polymer material may be used to secure heat resistance or mechanical strength, and may be optionally used in a single-layered or a multi-layered structure.

### Electrolyte

In addition, the electrolyte used in the present invention may be an organic liquid electrolyte, an inorganic liquid electrolyte, a solid polymer electrolyte, a gel-type polymer electrolyte, a solid inorganic electrolyte, a molten-type inorganic electrolyte, and the like, all of which may be used in the manufacture of a secondary battery, but is not limited thereto.

Specifically, the electrolyte may include an organic solvent and a lithium salt.

The lithium salt may be used without particular limitation as long as it is a compound capable of providing lithium ions used in lithium secondary batteries. Specifically, as the lithium salt, LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, LiB(C₂O₄)₂, or the like may be used. The lithium salt may be used in a concentration range of 0.1 M to 2.0 M. When the concentration of the lithium salt is in the above range, the electrolyte has suitable conductivity and viscosity, thereby exhibiting excellent performance, and lithium ions may effectively move.

The organic solvent may include at least one type selected from linear carbonate, cyclic carbonate, linear ester, cyclic ester, ether, glyme, and nitrile.

The linear carbonate may include at least one type selected from the group consisting of dimethyl carbonate (DMC), diethyl carbonate (DEC), dipropyl carbonate, ethylmethyl carbonate (EMC), methylpropyl carbonate, and ethylpropyl carbonate.

The cyclic carbonate may include at least one type selected from the group consisting of ethylene carbonate (EC), propylene carbonate (PC), 1,2-butylene carbonate, 2,3-butylene carbonate, 1,2-pentylene carbonate, and 2,3-pentylene carbonate.

The linear ester may specifically be, for example, methyl acetate, ethyl acetate, propyl acetate, methyl propionate, ethyl propionate, propyl propionate, and butyl propionate, but is not limited thereto.

The cyclic ester may specifically be, for example, γ-butyrolactone, γ-valerolactone, γ-caprolactone, σ-valerolactone, and ε-caprolactone, but is not limited thereto.

The ether may specifically be, for example, dimethyl ether, diethyl ether, dipropyl ether, methylethyl ether, methylpropyl ether, ethylpropyl ether, 1,3-dioxolane (DOL), and 2,2-bis(trifluoromethyl)-1,3-dioxolane (TFDOL), but is not limited thereto.

The glyme may specifically be, for example, dimethoxyethane (glyme, DME), diethoxyethane, diglyme, tri-glyme, and tetra-glyme (TEGDME), but is not limited thereto.

The nitrile may specifically be, for example, acetonitrile, propionitrile, butyronitrile, valeronitrile, caprylonitrile, heptanenitrile, cyclopentane carbonitrile, cyclohexane carbonitrile, 2-fluorobenzonitrile, 4-fluorobenzonitrile, difluorobenzonitrile, trifluorobenzonitrile, phenylacetonitrile, 2-fluorophenylacetonitrile, 4-fluorophenylacetonitrile, and the like, but is not limited thereto.

More specifically, the organic solvent may include a cyclic carbonate, a linear ester, and a halogen-containing cyclic carbonate. In this case, the high dielectric constant of cyclic carbonate, the effect of improving ionic conductivity, the effect of obtaining appropriate viscosity of linear ester, the improvement of electrolyte impregnability, and the effect of reducing the extent of reduction decomposition at high voltage may be improved all together, and accordingly, it is more preferable in terms of improving stability at high voltage and lifetime performance, and in particular, it is preferable in that a stable solid electrolyte interface layer (SEI layer) may be formed on the negative electrode of the present invention, which uses a silicon-based active material through halogen-containing cyclic carbonate.

When the organic solvent includes cyclic carbonate, linear ester, and halogen-containing cyclic carbonate, the cyclic carbonate may include at least one type selected from ethylene carbonate and propylene carbonate as a halogen-free cyclic carbonate, the linear ester may include at least one type selected from ethyl propionate and propyl propionate, the halogen-containing cyclic carbonate may include at least one type selected from fluoroethylene carbonate and difluoroethylene carbonate.

When the organic solvent includes cyclic carbonate, linear ester, and halogen-containing cyclic carbonate, the organic solvent may include the cyclic carbonate in an amount of 10 wt% to 50 wt%, specifically 15 wt% to 30 wt%, the organic solvent may include the linear ester in an amount of 30 wt% to 80 wt%, specifically 40 wt% to 70 wt%, and the organic solvent may include the halogen-containing cyclic carbonate in an amount of 5 wt% to 30 wt%, specifically 10 wt% to 25 wt%.

The electrolyte may further include an additive along with a lithium salt and an organic solvent.

The additive may include at least one type selected from the group consisting of vinylethylene carbonate, propane sultone, lithium tetrafluoro borate (LiBF4), lithium difluoro(oxalato) borate (LiODFB), hexane tri-cyanide (1,3,6-HTCN), and sodium superoxide (NaO₂), and may specifically include fluoroethylene carbonate, difluoroethylene carbonate, vinylethylene carbonate, propane sultone, lithium tetrafluoro borate (LiBF4), lithium difluoro(oxalato) borate (LiODFB), hexane tri-cyanide (1,3,6-HTCN), succinonitrile, 1,4-dicyano-2-butyne, adipionitrile, lithium difluorophosphate (LiPO₂F₂), and sodium superoxide (NaO₂).

The electrolyte may include the other additives in an amount of 0.1 wt% to 20 wt%, specifically 1 wt% to 10 wt%, but the present invention is not limited thereto.

In the secondary battery according to the present invention, excellent quick charging performance and lifetime performance may be achieved when a secondary battery having high energy density is used at high voltage through a combination of a positive electrode having excellent structural stability and resistance improvement effect and a negative electrode having a small thickness and high energy density.

Specifically, the secondary battery according to the present invention may have an energy density of 800 Wh/L or greater. The energy density is obtained by charging the secondary battery at 0.7 C up to 4.5 V in a constant current/constant voltage mode (CC/CV mode), discharging the secondary battery at 0.2 C up to 3.0 V in a constant current mode (CC mode), and then calculating using Equation 1 below. [Equation 1] 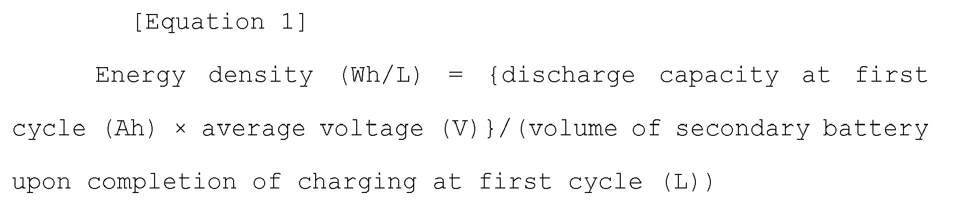 Energy density (Wh/L) = {discharge capacity at first cycle (Ah) × average voltage (V)}/(volume of secondary battery upon completion of charging at first cycle (L))

In Equation 1 above, watt-hour (Wh) obtained by multiplying a voltage, a current, and a discharge time at a time point at which discharging is ended, was divided by a discharge capacity at a first cycle to obtain the average voltage.

In the secondary battery of the present invention, an N/P ratio calculated by Equation 2 below may be 1.0 to 1.5, preferably 1.0 to 1.2. [Equation 2] 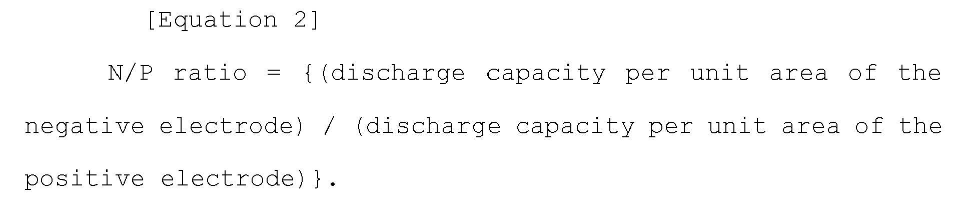 N/P ratio = {(discharge capacity per unit area of the negative electrode) / (discharge capacity per unit area of the positive electrode)}.

Specifically, the discharge capacity per unit area of the negative electrode may be obtained by the following method. Prepare the same negative electrode sample as the negative electrode used first. A coin-type half-cell including the negative electrode sample, a lithium metal counter electrode facing the negative electrode, a separator interposed between the negative electrode and the lithium metal counter electrode, and an electrolyte is prepared, and the discharge capacity is obtained. The discharge capacity is divided by the area of the negative electrode sample to obtain the discharge capacity per unit area of the negative electrode.

In addition, the discharge capacity per unit area of the positive electrode may be obtained by the following method. Prepare the same positive electrode sample as the positive electrode used first. A coin-type half-cell including the positive electrode sample, a lithium metal counter electrode facing the positive electrode, a separator interposed between the negative electrode and the lithium metal counter electrode, and an electrolyte is prepared, and the discharge capacity is obtained. The discharge capacity is divided by the area of the positive electrode sample to obtain the discharge capacity per unit area of the positive electrode.

The secondary battery may further include a battery case accommodating the negative electrode, the positive electrode, the separator, and the electrolyte.

The secondary battery may be prepared by accommodating an electrode assembly in which a separator is disposed between the negative electrode and the positive electrode in the battery case and injecting an electrolyte according to a typical secondary battery preparation method.

### <Battery system>

In addition, the present invention provides a battery system including the secondary battery described above.

Specifically, the battery system includes the secondary battery described above, and a control unit configured to set a voltage range upon charging and discharging of the secondary battery.

Descriptions of the secondary battery is as described above.

The control unit is not particularly limited as long as the unit is capable of controlling a voltage range upon charging and discharging of a secondary battery, and may be, for example, an electrochemical charging/discharging device. Specifically, the control unit may be embedded in a battery management system (BMS) included in a battery pack.

The voltage range by the control unit may be set to satisfy Equation 3 below. [Equation 3] $0.60 \leq \left({V}_{max}-X\right) / Y \leq 0.67$

In Equation 3 above, Vₘₐₓ is a maximum voltage set by the control unit and Y is a value calculated by Equation Vₘₐₓ-Vₘᵢₙ/1.47, and in this case, Vₘᵢₙ is a minimum voltage set by the control unit and X is an average voltage when the secondary battery is charged and discharged with Vₘₐₓ and Vₘᵢₙ.

In Equation 3 above, the Vₘₐₓ may be 4.4 V to 4.6 V, specifically 4.40 V to 4.55 V, and the Vₘᵢₙ may be 2.8 V to 3.3 V, specifically 3.0 V to 3.3 V. According to the present invention, the secondary battery is capable of providing high lifetime performance even when used at high voltage, and accordingly, a battery system having excellent lifetime performance within the above ranges of Vₘₐₓ and Vₘᵢₙ is achievable.

Hereinafter, Examples of the present invention will be described in detail so that those skilled in the art may easily carry out the present invention. The present invention may, however, be embodied in many different forms, and is not limited to Examples set forth herein.

### Example

Example 1: Preparation of secondary battery

### 1. Preparation of negative electrode

### (1) Preparation of carbon-based active material and silicon-based active material

As a carbon-based active material, artificial graphite (average particle diameter (D₅₀): 18 µm) was prepared. The carbon-based active material was used as a first carbon-based active material and a second carbon-based active material, which will be described later.

As a silicon-based active material, a silicon-based active material in which Mg was doped into SiO and a carbon coating layer was present on a surface thereof was prepared. The silicon-based active material had an average particle diameter (D₅₀) of 8.5 µm, the silicon-based active material included the carbon coating layer in an amount of 4 wt%, and Mg was doped in an amount of 9 wt% into the silicon-based active material. The silicon-based active material was used as a first silicon-based active material and a second silicon-based active material, which will be described later.

### <Preparation of slurry for first negative electrode active material layer>

The first carbon-based active material, the first silicon-based active material, styrene butadiene rubber (SBR) as a first negative electrode binder, carboxymethylcellulose (CMC) as a first thickener, and single-wall carbon nanotube (SWCNT) as a first negative electrode conductive material were mixed in a weight ratio of 85.2:9.5:4.0:1.0:0.3, and the mixture was added to water as a solvent to prepare a slurry for a first negative electrode active material layer.

### <Preparation of slurry for second negative electrode active material layer>

The second carbon-based active material, the second silicon-based active material, styrene butadiene rubber (SBR) as a second negative electrode binder, carboxymethylcellulose (CMC) as a second thickener, and single-wall carbon nanotube (SWCNT) as a second negative electrode conductive material were mixed in a weight ratio of 87.0:9.7:2.0:1.0:0.3, and the mixture, as a solvent, was added to water to prepare a slurry for a second negative electrode active material layer.

### <Preparation of first and second negative electrode active material layers>

While the slurry for a first negative electrode active material layer prepared above was applied to a copper foil (thickness: 6 µm) as a negative electrode current collector, substantially concurrently, the slurry for a second negative electrode active material layer prepared above was applied onto the coated slurry for a first negative electrode active material layer, roll pressed, and dried in a vacuum oven at 130 °C for 10 hours to prepare a negative electrode in which a negative electrode current collector, a first negative electrode active material layer, and a second negative electrode active material layer were sequentially stacked.

A ratio of the weight ratio of a first negative electrode binder in the first negative electrode active material layer (4 wt%, with respect to 100 wt% of the first negative electrode active material layer) and the weight ratio of a second negative electrode binder in the second negative electrode active material layer (2 wt%, with respect to 100 wt% of the second negative electrode active material layer) was about 2:1.

A total weight of the first negative electrode binder and the second negative electrode binder was 3 wt% with respect to a total weight of the first negative electrode active material layer and the second negative electrode active material layer.

The first negative electrode active material layer had a loading amount of 2.55 mAh/cm², the second negative electrode active material layer had a loading amount of 2.55 mAh/cm², and the sum of the loading amounts of the first negative electrode active material layer and the second negative electrode active material layer was 5.1 mAh/cm².

The first negative electrode active material layer had a thickness of 31.75 µm, the second negative electrode active material layer had a thickness of 31.75 µm, and the sum of the thicknesses of the first negative electrode active material layer and the second negative electrode active material layer was 63.5 µm.

The first negative electrode active material layer and the second negative electrode active material layer had an electrode density of 1.7 g/cc.

### 2. Preparation of positive electrode

80.270 g of Co₃O₄ as cobaltate, 36.940 g of Li₂CO₃ as a lithium precursor, 0.051 g of TiO₂ as a metal precursor, 0.050 g of ZrO₂, 0.590 g of Al₂O₃, and 0.177 g of MgO were dry-mixed and then the mixture was heat-treated in a furnace at 1,050 °C for 10 hours to prepare large particles (average particle diameter (D₅₀): 16 µm) in which 437 ppm of Ti, 423 ppm of Zr, 1,500 ppm of Mg, and 4,500 ppm of Al were doped or applied onto lithium cobalt-based oxide particles. An amount of the metal was measured through ICP-AES (device name: AVIO500, manufacturer: Perkin Elmer).

In addition, the same small particles as the large particles were prepared, except that the average particle diameter (D₅₀) was adjusted to 3 µm.

A mixture of the large particles and the small particles in a weight ratio of 3:1 was used as a positive electrode active material.

The positive electrode active material, a mixture of carbon black and multi-wall carbon nanotubes in a weight ratio of 1:0.5 as a conductive material, and polyvinylidene fluoride (PVdF) as a binder were added at a weight ratio of 96: 1.5: 1.5 to N-methyl-2-pyrrolidone (NMP) as a solvent for forming a positive electrode slurry to prepare a positive electrode slurry. As a positive electrode current collector, an aluminum collector (thickness: 10 µm) was coated with the positive electrode slurry at a loading amount of 4.85mAh/cm², and the resulting product was roll pressed, and dried in a vacuum oven at 130 °C for 10 hours to form a positive electrode active material layer (thickness: 63.5 µm), thereby preparing a positive electrode (thickness of the positive electrode: 73.5 µm).

The positive electrode had an electrode density of 4.15 g/cc.

### 3. Preparation of secondary battery

A secondary battery of Example 1 was prepared by interposing a polyethylene separator between the negative electrode and the positive electrode prepared above, and injecting an electrolyte. An electrolyte, in which vinylene carbonate was added in an amount of 3 wt% to an organic solvent in which fluoroethylene carbonate (FEC), ethylene carbonate (EC), and ethyl propionate (EP) were mixed in a volume ratio of 20:20:60, and LiPF₆ as a lithium salt was added at a concentration of 1 mol/L, was used.

The secondary battery of Example 1 had an N/P ratio of 1.05.

### 4. Measurement of energy density

The energy density of the secondary battery of Example 1 was measured as follows.

First, the secondary battery was charged and discharged once under the following conditions of charging and discharging.

### <Conditions of charging and discharging>

Charging: charging was performed in a CC/CV mode at 0.7 C up to 4.5 V (0.05 C current cut-off).

Discharging: discharging was performed in a CC mode at 0.2 C up to 3.0 V.

The energy density was calculated using Equation 1 below. [Equation 1] 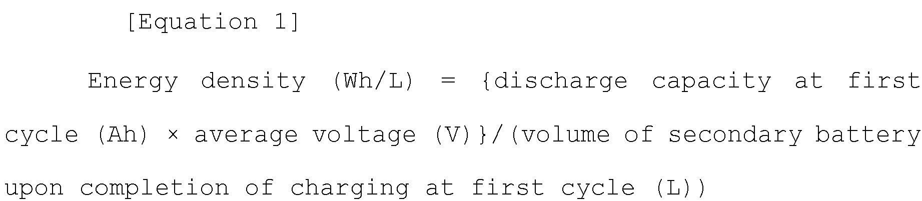 Energy density (Wh/L) = {discharge capacity at first cycle (Ah) × average voltage (V)}/(volume of secondary battery upon completion of charging at first cycle (L))

In Equation 1 above, watt-hour (Wh) obtained by multiplying a voltage, a current, and a discharge time at a time point at which discharging is ended by reaching a minimum voltage, was divided by a discharge capacity at a first cycle to obtain the average voltage.

The energy density of the secondary battery of Example 1 calculated above was 810 Wh/L.

### Example 2: Preparation of secondary battery

A positive electrode active material was prepared in the same manner as in Example 1, except that the amount of metals each included in the large particles and the small particles was adjusted to 752 ppm of Ti, 48 ppm of Zr, 1,500 ppm of Mg, and 4,500 ppm of Al.

A secondary battery was prepared in the same manner as in Example 1, except that the prepared positive electrode active material was used.

The secondary battery had an N/P ratio of 1.05 and an energy density of 810 Wh/L.

### Example 3: Preparation of secondary battery

A positive electrode active material was prepared in the same manner as in Example 1, except that the amount of metals each included in the large particles and the small particles was adjusted to 653 ppm of Ti, 171 ppm of Zr, 1,500 ppm of Mg, and 4,500 ppm of Al.

A secondary battery was prepared in the same manner as in Example 1, except that the prepared positive electrode active material was used.

The secondary battery had an N/P ratio of 1.05 and an energy density of 810 Wh/L.

### Comparative Example 1: Preparation of secondary battery

A positive electrode active material was prepared in the same manner as in Example 1, except that Ti and Zr were not used as metals included in the large particles and the small particles, and the amount of metals each included in the large particles and the small particles was adjusted to 1,500 ppm of Mg and 4,500 ppm of Al.

A secondary battery was prepared in the same manner as in Example 1, except that the prepared positive electrode active material was used.

The secondary battery had an N/P ratio of 1.05 and an energy density of 810 Wh/L.

### Comparative Example 2: Preparation of secondary battery

A positive electrode active material was prepared in the same manner as in Example 1, except that Zr was not used as metals included in the large particles and the small particles, and the amount of metals each included in the large particles and the small particles was adjusted to 800 ppm of Ti, 1,500 ppm of Mg and 4,500 ppm of Al.

A secondary battery was prepared in the same manner as in Example 1, except that the prepared positive electrode active material was used.

The secondary battery had an N/P ratio of 1.05 and an energy density of 810 Wh/L.

### Comparative Example 3: Preparation of secondary battery

A positive electrode active material was prepared in the same manner as in Example 1, except that Ti was not used as metals included in the large particles and the small particles, and the amount of metals each included in the large particles and the small particles was adjusted to 800 ppm of Zr, 1,500 ppm of Mg and 4,500 ppm of Al.

A secondary battery was prepared in the same manner as in Example 1, except that the prepared positive electrode active material was used.

The secondary battery had an N/P ratio of 1.05 and an energy density of 810 Wh/L.

### Comparative Example 4: Preparation of secondary battery

A positive electrode active material was prepared in the same manner as in Example 1, except that the amount of metals each included in the large particles and the small particles was adjusted to 239 ppm of Ti, 57 ppm of Zr, 1,500 ppm of Mg, and 4,500 ppm of Al.

A secondary battery was prepared in the same manner as in Example 1, except that the prepared positive electrode active material was used.

The secondary battery had an N/P ratio of 1.05 and an energy density of 810 Wh/L.

### Comparative Example 5: Preparation of secondary battery

A positive electrode active material was prepared in the same manner as in Example 1, except that the amount of metals each included in the large particles and the small particles was adjusted to 1,275 ppm of Ti, 250 ppm of Zr, 1,500 ppm of Mg, and 4,500 ppm of Al.

A secondary battery was prepared in the same manner as in Example 1, except that the prepared positive electrode active material was used.

The secondary battery had an N/P ratio of 1.05 and an energy density of 810 Wh/L.

### Comparative Example 6: Preparation of secondary battery

### 1. Preparation of negative electrode

Artificial graphite (average particle diameter (D₅₀): 18 µm) as a carbon-based active material, styrene butadiene rubber (SBR) as a negative electrode binder, carboxymethylcellulose (CMC) as a thickener, and single-wall carbon nanotube (SWCNT) as a negative electrode conductive material were mixed in a weight ratio of 96.3:2.0:1.5:0.2, and the mixture was added to water as a solvent to prepare a slurry for a negative electrode active material layer.

The slurry for a negative electrode active material layer prepared above was applied onto copper foil (thickness: 6 µm) as a negative electrode current collector, and roll pressed, and then dried in a vacuum oven at 130 °C for 10 hours to form a negative electrode active material layer, which was used as a negative electrode.

The negative electrode active material layer had a loading amount of 5.17 Ah/cm², a thickness of 87 µm, and an electrode density of 1.8 g/cc.

### 2. Preparation of positive electrode

The same positive electrode as the positive electrode prepared in Example 3 was prepared.

### 3. Preparation of secondary battery

A secondary battery was prepared in the same manner as in Example 3, except that the positive electrode and the negative electrode prepared above were used.

The secondary battery had an N/P ratio of 1.05 and an energy density of 810 Wh/L.

### Comparative Example 7: Preparation of secondary battery

A positive electrode active material was prepared in the same manner as in Example 1, except that the amount of metals each included in the large particles and the small particles was adjusted to 653 ppm of Ti, 171 ppm of Zr, 1,500 ppm of Mg, and 2,800 ppm of Al.

A secondary battery was prepared in the same manner as in Example 1, except that the prepared positive electrode active material was used.

The secondary battery had an N/P ratio of 1.05 and an energy density of 810 Wh/L.

### Comparative Example 8: Preparation of secondary battery

A positive electrode active material was prepared in the same manner as in Example 1, except that the amount of metals each included in the large particles and the small particles was adjusted to 653 ppm of Ti, 171 ppm of Zr, 1,500 ppm of Mg, and 7,600 ppm of Al.

A secondary battery was prepared in the same manner as in Example 1, except that the prepared positive electrode active material was used.

The secondary battery had an N/P ratio of 1.05 and an energy density of 810 Wh/L.

**[Table 1]**

| | Amount of metal (ppm, with respect to weight of positive electrode active material) | | | | |
|---|---|---|---|---|---|
| | Ti | Zr | Mg | Al | Ti+Zr |
| Example 1 | 437 | 423 | 1,500 | 4,500 | 860 |
| Example 2 | 752 | 48 | 1,500 | 4,500 | 800 |
| Example 3 | 653 | 171 | 1,500 | 4,500 | 824 |
| Comparative Example 1 | 0 | 0 | 1,500 | 4,500 | 0 |
| Comparative Example 2 | 800 | 0 | 1,500 | 4,500 | 800 |
| Comparative Example 3 | 0 | 800 | 1,500 | 4,500 | 800 |
| Comparative Example 4 | 239 | 57 | 1,500 | 4,500 | 296 |
| Comparative Example 5 | 1,275 | 250 | 1,500 | 4,500 | 1,525 |
| Comparative Example 6 | 653 | 171 | 1,500 | 4,500 | 824 |
| Comparative Example 7 | 653 | 171 | 1,500 | 2,800 | 824 |
| Comparative Example 8 | 653 | 171 | 1,500 | 7, 600 | 824 |

### Experimental Example

### Experimental Example 1: Evaluation of quick charging performance at room temperature

Cycle capacity retention of the secondary batteries prepared in Examples 1 to 3 and Comparative Examples 1 to 8 was evaluated using an electrochemical charging/discharging device.

Cycle capacity retention test was performed at a temperature of 25 °C, and conditions of charging and discharging are as follows.

Charging conditions: CC/CV mode, 0.7 C, 4.5 V, 0.05 C cut off.

Discharging conditions: CC mode, 0.2 C, 3.2 V cut off.

The capacity retention was calculated as follows. 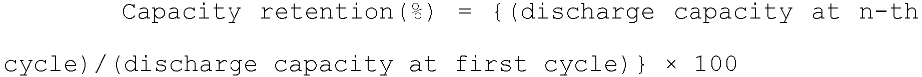 Capacity retention(%) = {(discharge capacity at n-th cycle)/(discharge capacity at first cycle)} × 100
(where N is an integer of 1 or more).

The 500th cycle capacity retention (%) is shown in Table 2 below.

### Experimental Example 2: Evaluation of quick charging performance at high temperature

Cycle capacity retention of the secondary batteries prepared in Examples 1 to 3 and Comparative Examples 1 to 8 was evaluated using an electrochemical charging/discharging device.

Cycle capacity retention test was performed at a temperature of 45 °C, and conditions of charging and discharging are as follows.

Charging conditions: CC/CV mode, 0.7 C, 4.5 V, 0.05 C cut off.

Discharging conditions: CC mode, 0.2 C, 3.2 V cut off.

The capacity retention rate was determined as follows. 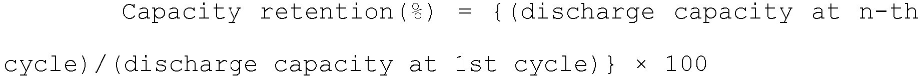 Capacity retention(%) = {(discharge capacity at n-th cycle)/(discharge capacity at 1st cycle)} × 100
(where N is an integer of 1 or more).

The 500th cycle capacity retention (%) is shown in Table 2 below.

### Experimental Example 3: Measurement of Co elution

After 500 cycles of charging and discharging were completed in Experimental Example 2, the negative electrodes were each separated from the secondary batteries of Examples 1 to 3 and Comparative Examples 1 to 8. The separated negative electrode was washed with dimethyl carbonate (DMC), and the negative electrode was scraped with a spatula to obtain a negative electrode active material (100 mg). 100 mg of the obtained negative electrode active material was put into a centrifugal tube, 1 mL of hydrochloric acid and 0.5 mL of hydrogen peroxide were added to the tube, and the mixture was dissolved at 100 °C for 3 hours to prepare a sample for analysis. The analysis sample was analyzed through ICP-OES (device name: AVIO 500, manufacturer: Perkin Elmer) to analyze an amount of Co elution. A weight of Co (unit: mg/kg) relative to a weight of the negative electrode active material is shown in Table 2 below.

**[Table 2]**

| | Experimental Example 1 | Experimental Example 2 | Experimental Example 3 |
|---|---|---|---|
| | 500th cycle capacity retention (%, @25 °C) | 500th cycle capacity retention (%, @45 °C) | Co elution amount (mg/kg) |
| Example 1 | 78.3 | 78.3 | 480 |
| Example 2 | 76.4 | 76.4 | 514 |
| Example 3 | 82.5 | 82.5 | 449 |
| Comparative Example 1 | 60.2 | 62.2 | 880 |
| Comparative Example 2 | 65.7 | 66.4 | 813 |
| Comparative Example 3 | 68.3 | 68.3 | 780 |
| Comparative Example 4 | 66.1 | 66.1 | 811 |
| Comparative Example 5 | 63.5 | 63.5 | 873 |
| Comparative Example 6 | 75.4 | 61.4 | 943 |
| Comparative Example 7 | 50.3 | 42.8 | 1,260 |
| Comparative Example 8 | 67.7 | 64.3 | 770 |

Referring to Table 2, it is seen that the secondary batteries of Examples 1 to 3 including the negative electrode and the positive electrode having the characteristics according to the present invention showed a remarkable improvement in quick charging performance and lifetime performance at room temperature and high temperature, and a remarkable reduction in an elution amount of Co, compared to Comparative Examples 1 to 8.

## Claims

1. A secondary battery comprising:
a positive electrode; a negative electrode; a separator disposed between the negative electrode and the positive electrode; and an electrolyte,
wherein the positive electrode comprises a positive electrode active material comprising a lithium cobalt-based oxide particle and a metal with which the lithium cobalt-based oxide particle is doped or coated,
the metal comprises aluminum (Al), magnesium (Mg), titanium (Ti), and zirconium (Zr),
the metal comprises the titanium (Ti) and the zirconium (Zr) in an amount of 300 ppm to 1,500 ppm with respect to a weight of the positive electrode active material,
the metal comprises the aluminum (Al) in an amount of 3,000 ppm to 7,000 ppm with respect to the weight of the positive electrode active material, and
the negative electrode comprises a carbon-based active material and a silicon-based active material.

2. The secondary battery of claim 1, wherein the secondary battery has an energy density of 800 Wh/L or more, with the energy density being measured as described in the specification.

3. The secondary battery of claim 1, wherein a weight ratio of the carbon-based active material to the silicon-based active material is 83:17 to 99:1.

4. The secondary battery of claim 1, wherein the carbon-based active material comprises at least one selected from the group consisting of artificial graphite, natural graphite, hard carbon, soft carbon, carbon black, graphene, and fibrous carbon.

5. The secondary battery of claim 1, wherein the silicon-based active material comprises a silicon-based compound represented by SiOₓ (0≤x<2).

6. The secondary battery of claim 1, wherein the negative electrode comprises a negative electrode current collector, and a negative electrode active material layer disposed on at least one surface of the negative electrode current collector, and
the negative electrode active material layer comprises a carbon-based active material and a silicon-based active material.

7. The secondary battery of claim 1, wherein the positive electrode active material is formed of a plurality of particles, and
wherein the plurality of particles has a bimodal structure of large particles and small particles.

8. The secondary battery of claim 7, wherein the large particles have an average particle diameter (D₅₀) of 10 µm to 25 µm, and
the small particles have an average particle diameter (D₅₀) of 1 µm to 7 µm,
with the average particle diameter (D₅₀) being a particle diameter at a cumulative volume of 50% in a particle size distribution of particles measured by laser diffraction.

9. The secondary battery of claim 1, wherein a weight ratio of the titanium (Ti) to the zirconium (Zr) is 0.5:1 to 18:1.

10. The secondary battery of claim 1, wherein a weight ratio of the aluminum (Al) relative to a total weight of the titanium (Ti) and the zirconium (Zr) is 4 to 8.

11. The secondary battery of claim 1, wherein the metal comprises the magnesium (Mg) in an amount of 800 ppm to 2,000 ppm with respect to the weight of the positive electrode active material.

12. The secondary battery of claim 1, wherein the positive electrode has a loading amount of 3.5 mAh/cm² to 7.5 mAh/cm².

13. The secondary battery of claim 1, wherein the negative electrode has a loading amount of 4 mAh/cm² to 8 mAh/cm².

14. The secondary battery of claim 1, wherein the electrolyte comprises a lithium salt and an organic solvent, and
the organic solvent comprises a cyclic carbonate, a linear ester, and a halogen-containing cyclic carbonate.

15. The secondary battery of claim 14, wherein the organic solvent comprises the cyclic carbonate in an amount of 10 wt% to 50 wt%, the linear ester in an amount of 30 wt% to 80 wt%, and the halogen-containing cyclic carbonate in an amount of 5 wt% to 30 wt%.

## Patentansprüche

1. Sekundärbatterie, umfassend:
eine Positivelektrode; eine Negativelektrode; einen Separator, der zwischen der Negativelektrode und der Positivelektrode angeordnet ist; und einen Elektrolyt,
wobei die Positivelektrode ein Positivelektrodenaktivmaterial umfasst, das ein Lithium-Kobalt-basiertes Oxidpartikel und ein Metall umfasst, mit dem das Lithium-Kobaltbasierte Oxidpartikel dotiert oder beschichtet ist,
das Metall Aluminium (Al), Magnesium (Mg), Titan (Ti) und Zirkonium (Zr) umfasst,
das Metall das Titan (Ti) und das Zirkonium (Zr) in einer Menge von 300 ppm bis 1.500 ppm bezogen auf ein Gewicht des Positivelektrodenaktivmaterials umfasst,
das Metall das Aluminium (Al) in einer Menge von 3.000 ppm bis 7.000 ppm bezogen auf das Gewicht des Positivelektrodenaktivmaterials umfasst, und
die Negativelektrode ein Aktivmaterial auf Kohlenstoffbasis und ein Aktivmaterial auf Siliziumbasis umfasst.

2. Sekundärbatterie nach Anspruch 1, wobei die Sekundärbatterie eine Energiedichte von 800 Wh/L oder mehr aufweist, wobei die Energiedichte wie in der Spezifikation beschrieben gemessen wird.

3. Sekundärbatterie nach Anspruch 1, wobei ein Gewichtsverhältnis des Aktivmaterials auf Kohlenstoffbasis zu dem Aktivmaterial auf Siliziumbasis 83:17 bis 99:1 beträgt.

4. Sekundärbatterie nach Anspruch 1, wobei das Aktivmaterial auf Kohlenstoffbasis mindestens eines umfasst, ausgewählt aus der Gruppe, die aus künstlichem Grafit, natürlichem Grafit, Hartkohlenstoff, Weichkohlenstoff, Ruß, Graphen und faserigem Kohlenstoff besteht.

5. Sekundärbatterie nach Anspruch 1, wobei das Aktivmaterial auf Siliziumbasis eine Verbindung auf Siliziumbasis umfasst, die durch SiOₓ (0≤x<2) dargestellt ist.

6. Sekundärbatterie nach Anspruch 1, wobei die Negativelektrode einen Negativelektrodenstromabnehmer und eine Negativelektrodenaktivmaterialschicht umfasst, die auf mindestens einer Oberfläche des Negativelektrodenstromabnehmers angeordnet ist, und
die Negativelektrodenaktivmaterialschicht ein Aktivmaterial auf Kohlenstoffbasis und ein Aktivmaterial auf Siliziumbasis umfasst.

7. Sekundärbatterie nach Anspruch 1, wobei das Positivelektrodenaktivmaterial aus einer Vielzahl von Partikeln gebildet ist, und
die Vielzahl von Partikeln eine bimodale Struktur aus großen Partikeln und kleinen Partikeln aufweist.

8. Sekundärbatterie nach Anspruch 7, wobei die großen Partikel einen mittleren Teilchendurchmesser (D₅₀) von 10 µm bis 25 µm aufweisen, und
die kleinen Partikel einen mittleren Teilchendurchmesser (D₅₀) von 1 µm bis 7 µm aufweisen,
wobei der mittlere Teilchendurchmesser (D₅₀) ein Teilchendurchmesser bei einem kumulativen Volumen von 50 % in einer Partikelgrößenverteilung von Partikeln ist, die mittels Laserbeugung gemessen werden.

9. Sekundärbatterie nach Anspruch 1, wobei ein Gewichtsverhältnis des Titans (Ti) zu dem Zirkonium (Zr) 0,5:1 bis 18:1 beträgt.

10. Sekundärbatterie nach Anspruch 1, wobei ein Gewichtsverhältnis des Aluminiums (Al) relativ zu einem Gesamtgewicht des Titans (Ti) und des Zirkoniums (Zr) 4 bis 8 beträgt.

11. Sekundärbatterie nach Anspruch 1, wobei das Metall das Magnesium (Mg) in einer Menge von 800 ppm bis 2.000 ppm bezogen auf das Gewicht des Positivelektrodenaktivmaterials umfasst.

12. Sekundärbatterie nach Anspruch 1, wobei die Positivelektrode eine Beladungsmenge von 3,5 mAh/cm² bis 7,5 mAh/cm² aufweist.

13. Sekundärbatterie nach Anspruch 1, wobei die Negativelektrode eine Beladungsmenge von 4 mAh/cm² bis 8 mAh/cm² aufweist.

14. Sekundärbatterie nach Anspruch 1, wobei der Elektrolyt ein Lithiumsalz und ein organisches Lösungsmittel umfasst, und
das organische Lösungsmittel ein zyklisches Carbonat, einen linearen Ester und ein halogenhaltiges zyklisches Carbonat umfasst.

15. Sekundärbatterie nach Anspruch 14, wobei das organische Lösungsmittel das zyklische Carbonat in einer Menge von 10 Gew.-% bis 50 Gew.-%, den linearen Ester in einer Menge von 30 Gew.-% bis 80 Gew.-% und das halogenhaltige zyklische Carbonat in einer Menge von 5 Gew.-% bis 30 Gew.-% umfasst.

## Revendications

1. Batterie secondaire comprenant :
une électrode positive ; une électrode négative ; un séparateur disposé entre l'électrode négative et l'électrode positive ; et un électrolyte,
dans laquelle l'électrode positive comprend un matériau actif d'électrode positive comprenant une particule d'oxyde à base de lithium et de cobalt et un métal avec lequel la particule d'oxyde à base de lithium et de cobalt est dopée ou revêtue,
le métal comprend de l'aluminium (Al), du magnésium (Mg), du titane (Ti), et du zirconium (Zr),
le métal comprend le titane (Ti) et le zirconium (Zr) dans une quantité de 300 ppm à 1 500 ppm par rapport à un poids du matériau actif d'électrode positive,
le métal comprend l'aluminium (Al) dans une quantité de 3 000 ppm à 7 000 ppm par rapport au poids du matériau actif d'électrode positive, et
l'électrode négative comprend un matériau actif à base de carbone et un matériau actif à base de silicium.

2. Batterie secondaire selon la revendication 1, dans laquelle la batterie secondaire présente une densité d'énergie de 800 Wh/L ou plus, la densité d'énergie étant mesurée comme décrit dans la spécification.

3. Batterie secondaire selon la revendication 1, dans laquelle un rapport de poids du matériau actif à base de carbone au matériau actif à base de silicium est 83:17 à 99:1.

4. Batterie secondaire selon la revendication 1, dans laquelle le matériau actif à base de carbone comprend au moins un sélectionné dans le groupe constitué de graphite artificiel, de graphite naturel, de carbone dur, de carbone mou, de noir de carbone, de graphène et de carbone fibreux.

5. Batterie secondaire selon la revendication 1, dans laquelle le matériau actif à base de silicium comprend un composé à base de silicium représenté par SiOₓ (0 ≤ x < 2).

6. Batterie secondaire selon la revendication 1, dans laquelle l'électrode négative comprend un collecteur de courant d'électrode négative, et une couche de matériau actif d'électrode négative disposée sur au moins une surface du collecteur de courant d'électrode négative, et
la couche de matériau actif d'électrode négative comprend un matériau actif à base de carbone et un matériau actif à base de silicium.

7. Batterie secondaire selon la revendication 1, dans laquelle le matériau actif d'électrode positive est formé d'une pluralité de particules, et
dans laquelle la pluralité de particules présente une structure bimodale de grandes particules et de petites particules.

8. Batterie secondaire selon la revendication 7, dans laquelle les grandes particules présentent un diamètre de particule moyen (D₅₀) de 10 µm à 25 µm, et
les petites particules présentent un diamètre de particule moyen (D₅₀) de 1 µm à 7 µm,
le diamètre de particule moyen (D₅₀) étant un diamètre de particule à un volume cumulé de 50 % dans une distribution de tailles de particules mesurées par diffraction laser.

9. Batterie secondaire selon la revendication 1, dans laquelle un rapport de poids du titane (Ti) au zirconium (Zr) est 0,5:1 à 18:1.

10. Batterie secondaire selon la revendication 1, dans laquelle un rapport de poids de l'aluminium (Al) par rapport à un poids total du titane (Ti) et du zirconium (Zr) est 4 à 8.

11. Batterie secondaire selon la revendication 1, dans laquelle le métal comprend le magnésium (Mg) dans une quantité de 800 ppm à 2 000 ppm par rapport au poids du matériau actif d'électrode positive.

12. Batterie secondaire selon la revendication 1, dans laquelle l'électrode positive présente une quantité de charge de 3,5 mAh/cm² à 7,5 mAh/cm².

13. Batterie secondaire selon la revendication 1, dans laquelle l'électrode négative présente une quantité de charge de 4 mAh/cm² à 8 mAh/cm².

14. Batterie secondaire selon la revendication 1, dans laquelle l'électrolyte comprend un sel de lithium et un solvant organique, et
le solvant organique comprend un carbonate cyclique, un ester linéaire, et un carbonate cyclique contenant un halogène.

15. Batterie secondaire selon la revendication 14, dans laquelle le solvant organique comprend le carbonate cyclique dans une quantité de 10 %pds à 50 %pds, l'ester linéaire dans une quantité de 30 %pds à 80 %pds, et le carbonate cyclique contenant un halogène dans une quantité de 5 %pds à 30 %pds.
